# EUROPÄISCHE PATENTSCHRIFT

(11) **EP 2 655 080 B1**
(45) Veröffentlichungstag und Bekanntmachung des Hinweises auf die Patenterteilung: **07.06.2023**
(21) Anmeldenummer: 11801612.0
(22) Anmeldetag: 19.12.2011
(51) Int. Cl.: B42D 15/00, G07D 7/12, G07D 7/00, B42D 25/29

(54) **OPTISCH VARIABLES ELEMENT**
OPTICALLY VARIABLE ELEMENT
ÉLÉMENT OPTIQUEMENT VARIABLE

(30) Priorität: 22.12.2010 DE 102010055688
(43) Veröffentlichungstag der Anmeldung: 30.10.2013
(60) Teilanmeldung: 23020193.1
(73) Patentinhaber: Giesecke+Devrient Currency Technology GmbH, 81677 München (DE)
(72) Erfinder: FUHSE, Christian, 83624 Otterfing (DE)
(74) Vertreter: Giesecke + Devrient IP
(86) Internationale Anmeldenummer: PCT/EP2011/006414
(87) Internationale Veröffentlichungsnummer: WO 2012/084182

(56) Entgegenhaltungen:
- EP-B1- 0 375 833
- DE-A1-102004 006 771
- DE-A1-102005 061 749
- DE-A1-102006 016 139
- FR-A1- 2 942 811

## Beschreibung

Die Erfindung betrifft ein optisch variables Element mit einem flächigen Motivbereich mit einem ersten Motiv sowie ein Wertdokument mit einem solchen optisch variablen Element.

Solche optisch variablen Elemente sind häufig reflektiv ausgebildet, wobei das erste Motiv beispielsweise durch Mikrospiegel mit einer hochbrechenden transparenten Beschichtung dargestellt werden kann. In diesem Fall ist das erste Motiv jedoch häufig nur sehr schwer sichtbar, insbesondere wenn mit dem optisch variablen Element noch weitere Effekte realisiert werden sollen, wie z. B. ein Kippeffekt, bei dem beim Kippen des flächigen Motivbereiches unterschiedliche Motive dargestellt werden können. Hierzu sind oft nahezu optimale Beleuchtungsverhältnisse mit möglichst parallelem Licht notwendig, damit diese Effekte auch sichtbar sind.

Zur Verbesserung der Sichtbarkeit werden solche weitgehend transparenten Darstellungen zudem oft vor einem dunklen Hintergrund angeordnet, der den Kontrast erhöht und die Erkennbarkeit der Darstellung verbessert. Ein solcher dunkler Hintergrund, insbesondere wenn er großflächig ist, wird aber aus Designgründen oft nicht gewünscht.

Darüber hinaus sind, selbst wenn eine Punktlichtquelle vorhanden ist, viele Effekte nur in einem sehr kleinen Raumwinkel sichtbar. Um den Raumwinkel in z. B. horizontaler Richtung zu erweitern, müssen die Mikrospiegel in den entsprechend größeren Raumwinkel reflektieren. Dies kann beispielsweise durch die entsprechend gekrümmten Mikrospiegel erreicht werden. Die Aufweitung des Raumwinkels ist aber mit einer geringeren Brillanz verbunden, da die einfallende Lichtmenge nun über einen größeren Raumwinkel verteilt wird. Die Sichtbarkeit wird so also noch weiter verschlechtert.

Aus der Druckschrift DE 10 2004 006 771 A1 ist ein Verfahren zum Erzeugen eines ebenen oder gekrümmten Gitterbildes, das zumindest ein vorgegebenes Bild mit einzelnen Bildbereichen zeigt, bekannt. Gemäß dem Verfahren wird eine Orientierung für das Gitterbild im Raum festgelegt, in welcher das vorgegebene Bild sichtbar sein soll und es wird für jeden Bildbereich eine Farbe festgelegt, in der der jeweilige Bildbereich bei der festgelegten Orientierung erscheint.

In der Druckschrift DE 10 2005 061 749 A1 ist ein optisch variables Sicherheitselement mit einer achromatisch reflektierenden Mikrostruktur in Form eines Mosaiks aus einer Vielzahl achromatisch reflektierender Mosaikelemente beschrieben. Die Mosaikelemente bilden ein vorbestimmtes Motiv, indem verschiedene Gruppen von Mosaikelementen einfallendes Licht in unterschiedliche Raumbereiche reflektieren.

Die Druckschrift EP 0 375 833 B1 befasst sich mit einem in einen Träger eingeprägten Flächenmuster, das in M Rasterfelder unterteilt ist. Jedes Rasterfeld ist in N Feldanteile aufgeteilt, wobei jeder Feldanteil einem Pixel einer von N Darstellungen zugeordnet ist und je ein Beugungselement aufweist, das die Informationen über einen Farbwert, über eine Stufe des Helligkeitswertes und über eine Betrachtungsrichtung enthält.

Aus der Druckschrift FR 2 942 811 A1 ist ein Sicherheitselement bekannt, das eine Anordnung von erhabenen Linien umfasst, wobei jede Linie mindestens eine Flanke umfasst, die jeweils einen Neigungswinkel relativ zur Richtung der Normalen der Anordnung definiert. Der Neigungswinkel der Flanke mindestens einer Linie der Anordnung variiert stufenweise entlang der Linie, so dass in Bezug auf die Lichtreflexion ein abgestufter optischer Effekt gebildet wird, der sich in Abhängigkeit von einem Betrachtungswinkel des Sicherheitselements ändert.

Ausgehend hiervon ist daher Aufgabe der Erfindung, ein optisch variables Element mit einem flächigen Motivbereich mit einem ersten Motiv zur Verfügung zu stellen, das in einem größeren Raumwinkel immer noch mit sehr gutem Kontrast sichtbar ist.

Erfindungsgemäß wird die Aufgabe gelöst durch ein optisch variables Element mit den Merkmalen des Anspruchs 1.

Aufgrund der Substrukturen sieht ein Betrachter die hellen Teilbereiche der entsprechenden Substruktur sehr hell und mit gutem Kontrast zu den dunklen Teilbereichen. Daher erscheint in vorteilhafter Weise das erste Motiv scharf und kontrastreich, obwohl der Raumwinkel, innerhalb dessen das Motiv sichtbar ist, durch die mehreren Substrukturen vergrößert ist.

Mittels der Substrukturen kann somit dasselbe Motiv in einem größeren Raumwinkel so dargestellt werden, dass für einen Betrachter immer derselbe Eindruck vorliegt. Lediglich die Substrukturen können leicht verschoben wahrgenommen werden. Insbesondere können die Substrukturen an sich wahrgenommen werden, wobei sie stets das erste Motiv repräsentieren.

Bei dem optisch variablen Element weist der flächige Motivbereich ein zweites Motiv (bevorzugt mehrere zweite Motive) auf, dass mehrere sich über das gesamte Motiv erstreckende Substrukturen enthält, die jeweils abwechselnd angeordnete helle und dunkle Teilbereiche aufweisen, wobei jede Substruktur des zweiten Motivs bei Variation des ersten Betrachtungswinkels nur unter genau einem der ersten Betrachtungswinkel sichtbar ist und alle ersten Betrachtungswinkel der Substrukturen des zweiten Motivs verschieden sind, wobei jedes Motiv bei Variation eines in einer zweiten Ebene liegenden zweiten Betrachtungswinkels relativ zur Beleuchtungsrichtung nur unter genau einem der zweiten Betrachtungswinkel sichtbar ist und alle zweiten Betrachtungswinkel verschieden sind, so dass in Abhängigkeit des ersten und zweiten Betrachtungswinkels das entsprechende Motiv mit nur der entsprechenden Substruktur wahrnehmbar ist, wobei das erste und das zweite Motiv bei Änderung des zweiten Betrachtungswinkels einen kinematischen Effekt darbieten.

In dieser Art und Weise können mehrere Motive unter unterschiedlichen zweiten Betrachtungswinkeln dargestellt werden, so dass beispielsweise Kippeffekte, kinematische Effekte, stereographische Darstellungen, etc. verwirklicht werden können. Gleichzeitig weist das entsprechend sichtbare Motiv die Substruktur gemäß dem ersten Betrachtungswinkel auf, so dass ein vergrößerter Raumwinkel erreicht wird, in dem die Motive scharf und kontrastreich sichtbar sind.

Die Sichtbarkeit unter dem ersten und/ oder zweiten Betrachtungswinkel bezieht sich hier bevorzugt auf den idealisierten Fall, bei dem der flächige Motivbereich entlang der Beleuchtungsrichtung mit parallelem Licht beleuchtet wird, so dass das Licht pro Substruktur in genau einem Winkel reflektiert wird. Natürlich wird in der Praxis immer ein Strahlenbündel mit einem gewissen Divergenzwinkel reflektiert werden, da z. B. die Beleuchtung nicht ideal parallel ist und die Substrukturen selbst bei der Reflexion eine Strahlaufweitung verursachen. In diesem Fall bezieht sich der erste und/oder zweite Betrachtungswinkel bevorzugt auf den Hauptstrahl des jeweiligen reflektierten Strahlenbündels.

Ferner kann das erfindungsgemäße optisch variable Element mehrere zweite Motive für unterschiedliche zweite Betrachtungswinkel und jeweils mit entsprechenden Substrukturen aufweisen, so dass z. B. die Kippeffekte und der kinematische Effekt optisch attraktiver gestaltet werden können, da mehr als zwei verschiedene Motive vorgesehen werden können.

Die Ausbildung der Substrukturen ist bevorzugt für alle Motive gleich. Dies vereinfacht die Herstellbarkeit des erfindungsgemäßen optisch variablen Elementes.

Insbesondere können bei Änderung des ersten Betrachtungswinkels die verschiedenen Substrukturen einen kinematischen Effekt auf kleinerer Längenskala darbieten im Vergleich zum kinematischen Effekt der Motive.

Das optisch variable Element kann insbesondere als reflektives Element ausgebildet sein. Es ist jedoch auch eine transparente oder teiltransparente Ausbildung möglich.

Bei zumindest einer der Substrukturen können die abwechselnd angeordneten hellen und dunklen Teilbereiche sich zumindest lokal periodisch wiederholen:

Ferner können bei zumindest einer der Substrukturen die hellen Teilbereiche durch ein Linien- bzw. Kurvenmuster zumindest lokal paralleler Linien bzw. Kurven gebildet sein. Es ist jedoch auch jedes andere Muster möglich.

Beispielsweise können nicht linienförmige, helle Teilbereiche beispielsweise zumindest lokal periodisch angeordnet sein.

Die hellen Teilbereiche sind mit einer Raumfrequenz zwischen 0,5/mm und 5/mm (also 0,5 bis 5 helle Teilbereiche pro mm) und bevorzugt mit einer Raumfrequenz von 1/mm bis 5/mm angeordnet. Besonders bevorzugt ist eine Raumfrequenz von 3/mm. Damit wird einerseits erreicht, dass noch ein ausgezeichneter Kontrast sichtbar ist. Andererseits kann sichergestellt werden, dass die Auflösung des Motivs aufgrund der Substruktur nicht unnötig verschlechtert ist.

Ferner kann bei dem erfindungsgemäßen optisch variablen Element der Abstand der hellen Teilbereiche bei zumindest einer der Substrukturen um mindestens einen Faktor 5, bevorzugt mindestens einen Faktor 10 kleiner sein als die Ausdehnung des ersten Motivs in Richtung des Abstandes der hellen Teilbereiche.

Bevorzugt stehen die erste und zweite Ebene aufeinander senkrecht. Insbesondere können die erste und zweite Ebene noch senkrecht zu der Ebene des flächigen Motivbereiches sein.

Der flächige Motivbereich kann gerichtet reflektierende Elemente (insbesondere reflektierende Facetten) aufweisen. Bevorzugt ist deren Abmessung innerhalb des flächigen Motivbereiches mindestens 3µm, bevorzugt mindestens 5µm und besonders bevorzugt mindestens 10µm.

Die gerichtet reflektierenden Elemente können so ausgebildet sein, dass sie Spiegelflächen (insbesondere plane Spiegelflächen) sind oder dass die reflektive Wirkung mittels diffraktiver Strukturen erzeugt wird. Insbesondere können die diffraktiven Strukturen als asymmetrische Gitterstrukturen mit einer Periode von maximal 5 µm, bevorzugt maximal 3 µm und besonders bevorzugt maximal 2 µm ausgebildet sein.

Ferner ist es auch möglich, dass der flächige Motivbereich reflektierende Elemente aufweist, die durch im Wesentlichen strahlenoptisch reflektierende Gitterperioden von mehr als 5 µm und bevorzugt von mehr als 10 µm ausgebildet sind.

Die gerichtet reflektierenden Elemente sind bevorzugt rasterartig im flächigen Motivbereich angeordnet. Dies ist bevorzugt auch für die entsprechenden Elemente in der Ausgestaltung der Fall, in der das erfindungsgemäße optisch variable Element als transmissives Element ausgebildet ist.

Bei dem erfindungsgemäßen optisch variablen Element kann der flächige Motivbereich eine farbkippende Beschichtung aufweisen.

Das erfindungsgemäße optisch variable Element kann so ausgebildet sein, dass der Winkelbereich für den ersten und/ oder zweiten Betrachtungswinkel, unter dem das Motiv bzw. die Motive sichtbar sind, mindestens 40°, bevorzugt mindestens 60° und besonders bevorzugt mindestens 90° beträgt.

Ferner können die Substrukturen beim erfindungsgemäßen optisch variablen Element so ausgebildet sein, dass sie ein Betrachter mit unbewaffnetem Auge als solche wahrnehmen kann. Die Abmessungen der Substrukturen sind bevorzugt so gewählt, dass sie für einen Betrachter (mit unbewaffnetem Auge) stets das entsprechende Motiv bilden, aber selbst noch als solche wahrnehmbar sind.

Bei dem erfindungsgemäßen optisch variablen Element kann der flächige Motivbereich als Prägestruktur mit einer reflexionserhöhenden Beschichtung ausgebildet sein. Natürlich kann der flächige Motivbereich noch weitere Schichten bzw. Elemente aufweisen.

Das erfindungsgemäße optische variable Element kann insbesondere als Sicherheitselement ausgebildet und/ oder verwendet werden. Insbesondere kann es ein Sicherheitselement für ein Sicherheitspapier, Wertdokument oder dergleichen sein.

Das optisch variable Element kann insbesondere als Sicherheitsfaden, Aufreißfaden, Sicherheitsband, Sicherheitsstreifen, Patch oder als Etikett zum Aufbringen auf ein Sicherheitspapier, Wertdokument oder dergleichen ausgebildet sein. Insbesondere kann das optisch variable Element transparente oder zumindest transluszente Bereiche oder Ausnehmungen überspannen.

Das Wertdokument kann z. B. eine Banknote, eine Chipkarte, ein Pass, eine Identifikationskarte, eine Ausweiskarte, eine Aktie, eine Urkunde, ein Gutschein, ein Scheck, eine Eintrittskarte, eine Kreditkarte, eine Gesundheitskarte, etc. sein.

Unter dem Begriff Sicherheitspapier wird hier insbesondere die noch nicht umlauffähige Vorstufe zu einem Wertdokument verstanden, die neben dem erfindungsgemäßen optisch variablen Element beispielsweise auch weitere Echtheitsmerkmale (wie z. B. im Volumen vorgesehene Lumineszenzstoffe) aufweisen kann.

Unter Wertdokumenten werden hier ferner aus Sicherheitspapieren hergestellte Dokumente verstanden. Auch können Wertdokumente sonstige Dokumente oder Gegenstände sein, die mit dem erfindungsgemäßen optisch variablen Element versehen werden können, damit die Wertdokumente nicht kopierbare Echtheitsmerkmale aufweisen, wodurch eine Echtheitsprüfung möglich ist und zugleich unerwünschtes Kopieren verhindert wird.

Es wird ferner ein Wertdokument mit einem erfindungsgemäßen optisch variablen Element (einschließlich aller erfindungsgemäßen Weiterbildungen) bereitgestellt.

Des Weiteren wird ein Prägewerkzeug mit einer Prägefläche zum Prägen der Form des flächigen Motivbereiches des erfindungsgemäßen optisch variablen Elementes (einschließlich aller erfindungsgemäßen Weiterbildungen) bereit gestellt. Mit dem Prägewerkzeug kann die gewünschte Oberflächenstruktur des flächigen Motivbereiches geprägt werden.

Die Prägefläche des Prägewerkzeuges weist bevorzugt die invertierte Form der zu prägenden Oberflächenstruktur auf.

Ferner wird ein Master zur Herstellung eines optisch variablen Elementes bereitgestellt. Insbesondere kann der Master auch zur Herstellung der erfindungsgemäßen Weiterbildungen des optisch variablen Elementes bereitgestellt werden. Mit dem Master kann das beschriebene Prägewerkzeug hergestellt werden. Ferner ist es möglich, mit einem solchen Master Volumenhologramme zu bilden.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielshalber anhand der beigefügten Zeichnungen, die auch erfindungswesentliche Merkmale offenbaren, noch näher erläutert. Zur besseren Anschaulichkeit wird in den Figuren auf eine maßstabs- und proportionsgetreue Darstellung verzichtet. Es zeigen:
- Figur 1: eine Draufsicht einer Banknote mit einem erfindungsgemäßen optisch variablen Element 1;
- Figur 2: eine vergrößerte Draufsicht des ersten Motivs 4 des optisch variablen Elementes 1;
- Figur 3: eine Querschnittsansicht entlang der Linie A-A von Figur 2;
- Figur 4A: eine perspektivische Darstellung zur Erläuterung des durch einen Mikrospiegel abgedeckten Raumwinkels;
- Figuren 4B und 4C: Ansichten zur Erläuterung des ersten und zweiten Betrachtungswinkels;
- Figur 4D: eine perspektivische Ansicht zur Erläuterung des vergrößerten Raumwinkels bei dem erfindungsgemäßen optisch variablen Element 1;
- Figuren 5A-5E: schematische Ansichten der das erste Motiv 4 bildenden Substrukturen für unterschiedliche Betrachtungsrichtungen;
- Figuren 6A und 6B: Ansichten zur Erläuterung herkömmlicher Ausbildungen für das erste Motiv bei einem optisch variablen Element;
- Figur 6C: ein Vergleich mit der erfindungsgemäßen Ausbildung des ersten Motivs 4;
- Figuren 7A-7C: perspektivische Ansichten für die Ausgestaltungen gemäß Figuren 6A-6C;
- Figur 8A: eine perspektivische Darstellung zur Erläuterung einer Ausführungsform des erfindungsgemäßen optisch variablen Elementes;
- Figuren 8B und 8C: schematische Draufsichten zur Erläuterung des ersten und zweiten Motivs 4 und 10;
- Figuren 9A-9C: schematische Ansichten zur Erläuterung der erfindungsgemäßen Ausführungsform;
- Figur 10: eine schematische Draufsicht der Anordnung der Mikrospiegel 5 für die erfindungsgemäße Ausführungsform;
- Figuren 11A-11C: weitere Ansichten zur Erläuterung der erfindungsgemäßen Ausführungsform des optisch variablen Elementes;
- Figur 12A: eine Darstellung zur Erläuterung der Änderung der sichtbaren Substruktur 8 bei einem Kippen des flächigen Motivbereiches 3 um die y-Achse;
- Figur 12B: eine vergrößerte Darstellung des Details D1 aus Figur 12A;
- Figur 13A: eine Darstellung zur Erläuterung der Änderung des sichtbaren Motivs bei einem Kippen des flächigen Motivbereiches 3 um die x-Achse;
- Figur 13B: eine vergrößerte Darstellung des Details D2 aus Figur 13A;
- Figuren 14-17: Darstellungen zur Erläuterung weiterer möglicher Ausbildungen der Substrukturen 8, und
- Figuren 18 und 19: Darstellungen zur Beschreibung eines erfindungsgemäßen Prägewerkzeuges.

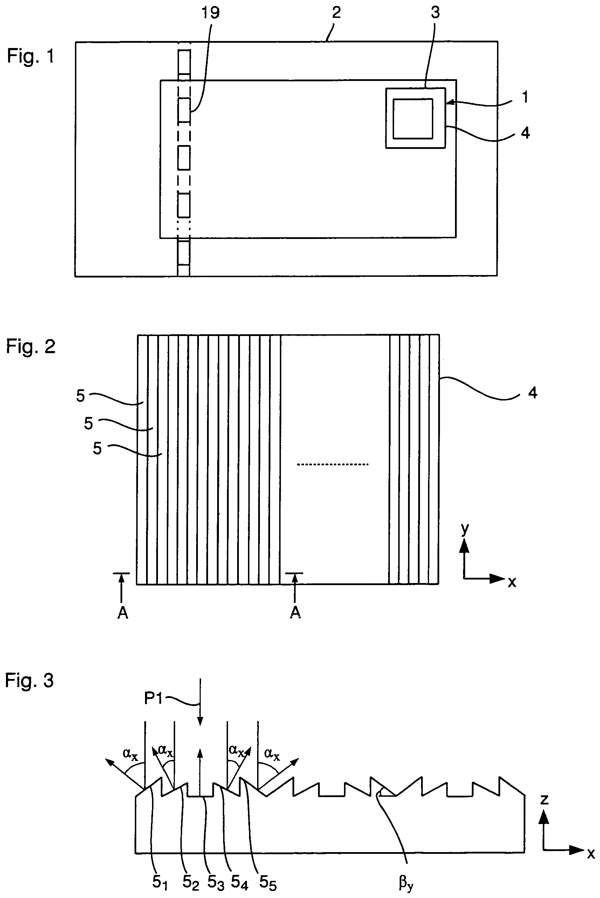

Bei der in Figur 1 gezeigten Ausführungsform ist das erfindungsgemäße optisch variable Element 1 auf der in Figur 1 gezeigten Vorderseite einer Banknote 2 aufgebracht und dient als Sicherheitselement bzw. Sicherheitsmerkmal, um die Echtheit der Banknote 2 überprüfen zu können.

Das Sicherheitselement 1 ist reflektiv ausgebildet und weist einen flächigen Motivbereich 3 auf, in dem ein erstes Motiv 4 in Form einer quadratischen reflektiven Fläche enthalten ist. Das erste Motiv 4 kann beispielsweise eine Ausdehnung von 10 mm x 10 mm aufweisen.

Wie in der vergrößerten schematischen Darstellung von Figur 2 in Verbindung mit der Schnittansicht von Fig. 3 entlang der Schnittlinie A-A in Fig. 2 ersichtlich ist, ist das erste Motiv 4 in streifenförmige Mikrospiegel 5 aufgeteilt, die sich entlang der y-Richtung über die gesamte Ausdehnung des ersten Motives 4 erstrecken und eine Breite (Ausdehnung in x-Richtung) von 200 µm aufweisen, wobei die Spiegelneigung β_{y} variiert.

Wie insbesondere der nicht maßstabtreuen Schnittdarstellung in Figur 3 zu entnehmen ist, ist eine Gruppe mit fünf Mikrospiegeln 5₁, 5₂, 5₃, 5₄ und 5₅ mit unterschiedlichen Spiegelneigungen periodisch wiederholt angeordnet. Die Gruppe der fünf Mikrospiegel ist hier 10-mal nebeneinander vorgesehen. In Fig. 3 sind zur Vereinfachung der Darstellung nur drei Gruppen der fünf Mikrospiegel 5₁-5₅ gezeigt.

Die Neigung β_{y} der Mikrospiegel 5₁-5₅ ist so gewählt, dass bei senkrechtem Lichteinfall, wie durch den Pfeil P1 in Figur 3 angedeutet ist, das reflektierte Licht mit der Einfallsrichtung einen Winkel αₓ (in der xz-Ebene) einschließt, der -20°, -10°, 0°, 10° und 20° für die fünf Mikrospiegel 5₁-5₅ beträgt. Da in der Praxis das reflektierte Licht nicht, wie in Figur 3 angedeutet ist, nur in einer einzigen Richtung reflektiert wird, sondern ein Divergenzwinkel von z.B. 10° vorliegt, wird mit dem erfindungsgemäßen optisch variablen Element 1, wie nachfolgend noch im Detail beschrieben wird, ein Betrachtungswinkelbereich in der xz-Ebene von 50° bereitgestellt.

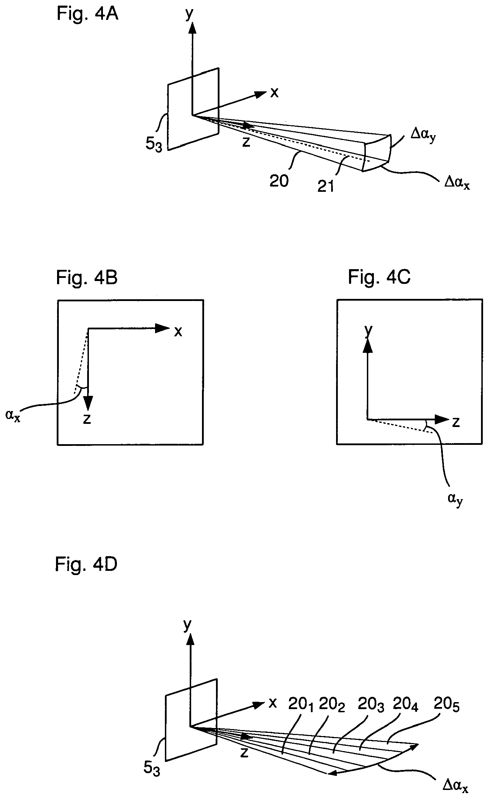

Für die Beschreibung der Ausführungsformen des erfindungsgemäßen optisch variablen Elementes 1 wird von einem rechtwinkligen Koordinatensystem mit x-, y-, z-Achse ausgegangen, wobei der flächige Motivbereich 3 und somit das erste Motiv 4 in der xy-Ebene liegt und der flächige Motivbereich 3 mit aus der z-Richtung einfallendem parallelem Licht beleuchtet wird. Ein Betrachter soll das Flächenmuster in Richtung der z-Achse betrachten bzw. aus einer in x-Richtung bzw. y-Richtung um einen Winkel αₓ bzw. α_{y} abweichenden Richtung, wie dies in Figuren 4A-4C für den erwähnten Divergenzwinkel von 10° veranschaulicht ist. In diesen Figuren ist ein einzelner Mikrospiegels 5₃ schematisch in der Art und Weise dargestellt, dass der Raumwinkel 20 eingezeichnet ist, in dem der Betrachter das vom Mikrospiegel 5₃ reflektierte Licht erfassen kann.

Wenn die Betrachtungsrichtung 21 innerhalb des Raumwinkels 20 liegt, sieht der Betrachter somit einen hellen Reflex. Die Betrachtungsrichtung 21 kann durch einen ersten Betrachtungswinkel αₓ in der xz-Ebene (Fig. 4B) und einen zweiten Betrachtungswinkel α_{y} in der yx-Ebene (Fig. 4C) eindeutig beschrieben werden.

Wenn nun ein Betrachter auf das Sicherheitselement 1 so blickt, dass der zweite Betrachtungswinkel α_{y} innerhalb des durch die Divergenz vorgegebenen Bereiches Δα_{y} liegt, sieht der Betrachter in Abhängigkeit des ersten Betrachtungswinkels αₓ nicht die gesamte Fläche des ersten Motivs als helle Fläche, sondern nur das reflektierte Licht der Mikrospiegel 5₁, 5₂, 5₃, 5₄ oder 5₅ der Spiegelgruppen, bei denen das reflektierte Licht in den entsprechenden Raumwinkelbereich 20₁, 202, 20₃, 20₄ oder 20s fällt. In Figur 4D sind die den Mikrospiegeln 5₁-5₅ zugeordneten Raumwinkelbereiche 20₁, 20₂, 20₃, 20₄ und 20s eingezeichnet, wobei zur Vereinfachung der Darstellung nur der zugehörige erste Betrachtungswinkelbereich Δαₓ jedes Raumwinkels 20₁-20₅ dargestellt ist.

Zur einfachen Beschreibung wird hierbei davon ausgegangen, dass der Betrachter seine Position ändert und die Position des flächigen Motivbereiches 3 sowie die Beleuchtungsrichtung unverändert bleibt. Diese Beschreibung ist beispielsweise äquivalent zu dem in der Praxis relevanteren Fall, bei dem die Betrachtungsrichtung sowie die Beleuchtungsrichtung fest bleiben und der flächige Motivbereich 3 gekippt wird (beispielsweise um die x- oder y-Achse).

Aufgrund der beschriebenen Ausbildungen und Anordnungen der Mikrospiegel 5₁-5₅ sieht der Betrachter ein Streifenmuster von voneinander beabstandeten hell aufleuchtenden Streifen, das das gewünschte erste Motiv 4 darstellt.

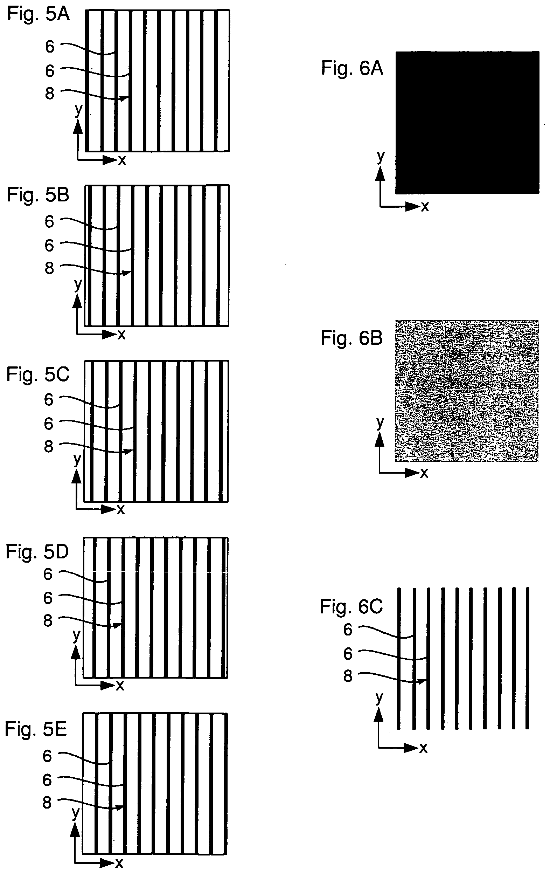

In Figur 5A ist der Fall gezeigt, dass ein Betrachter das an den Mikrospiegeln 5₁ in den Raumwinkel 20₁ reflektierte Licht bei Betrachtung des Sicherheitselementes 1 wahrnimmt. Die hell aufleuchtenden Streifen 6 sind hier als schwarze Linien dargestellt. Zusätzlich ist noch ein quadratische Umrandung 7 eingezeichnet, die bei Betrachtung des ersten Motives 4 nicht sichtbar ist, sondern nur zur Verdeutlichung der durch die hell aufleuchtenden Streifen 6 erzeugte Motivwirkung dient. In Figuren 5B bis 5E sind die Streifenmuster 8 für die verschiedene Betrachtungswinkel αₓ dargestellt, bei denen nur die Reflexionen an den Mikrospiegeln 5₂, 5₃, 5₄ oder 5₅ wahrnehmbar sind, da die ersten Betrachtungswinkel αₓ in den entsprechenden Raumwinkeln 20₂-20₅ liegen.

Bei allen Darstellungen ist aufgrund der gerichteten Reflexion der Mikrospiegel 5 einerseits eine hohe Helligkeit der sichtbaren hellen Streifen 6 gegeben und andererseits ein hoher Kontrast zwischen den hell wahrnehmbaren Streifen 6 und den dazwischen liegenden dunkleren Bereichen.

Die in den Figuren 5A bis 5E gezeigten Streifenmuster sind somit verschiedene Substrukturen 8 mit hellen und dunklen Teilbereichen, wobei sich jede Substruktur 8 über das gesamte erste Motiv 4 erstreckt. Das erste Motiv 4 ist somit immer mit nur einer der Substrukturen 8 sichtbar, wobei vom Betrachtungswinkel αₓ abhängt, welche der Substrukturen 8 das für den Betrachter sichtbare erste Motiv 4 bilden.

Selbst wenn die Mikrospiegel 5 lediglich schwach reflektierend sind (wenn sie beispielsweise durch eine strukturierte Oberfläche eines Prägelacks, die mit einer zirka 50 nm dicken hochbrechenden TiO₂-Schicht beschichtet ist, gebildet sind), kann das menschliche Auge die beschriebenen periodischen Linienanordnungen gemäß Figuren 5A-5F auch bei nur geringen Helligkeitsunterschieden sehr gut vom Hintergrund trennen. Mit dem erfindungsgemäßen optisch variablen Element 1 kann somit eine kontrastreiche und deutlich erkennbare Darstellung des ersten Motives 4 erzielt werden.

Der nachfolgende Vergleich mit bisher bekannten Lösungen zeigt besonders deutlich den Vorteil des erfindungsgemäßen optisch variablen Elementes.

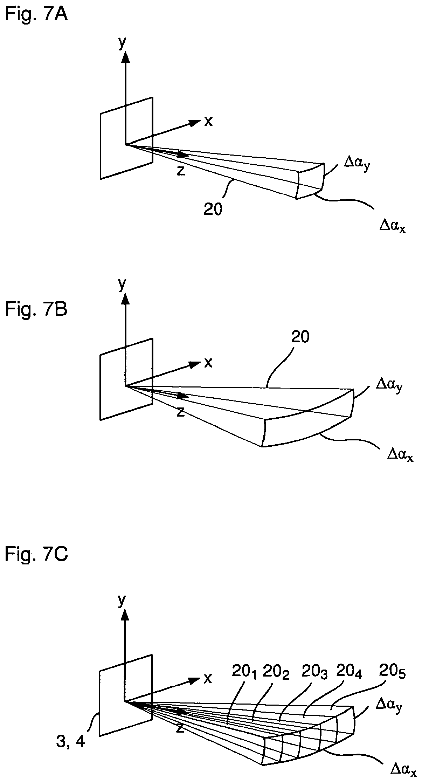

In Figur 6A ist schematisch das erste Motiv 4 für den Fall dargestellt, dass es durch eine einzige ebene Spiegelfläche realisiert ist, wie dies bisher üblich ist. In diesem Fall liegt zwar eine große Helligkeit vor (durch die schwarze Farbe dargestellt), aber nur in einem relativ kleinen Raumwinkel 20, wie in Fig. 7A schematisch gezeigt ist.

Wenn man nun einen größeren Winkelbereich für den ersten Betrachtungswinkel αₓ wünscht, hat man bisher z.B. die reflektierende Fläche so geändert, dass der Divergenzwinkel der reflektierten Strahlung in der xz-Ebene größer wird. Eine solche Aufweitung des Betrachtungswinkelbereiches ist dann aber mit einer geringeren Brillanz verbunden, da die einfallende Lichtmenge nun über einen größeren Winkelbereich Δαₓ bzw. Raumwinkel verteilt wird (Fig. 7B). Dies ist schematisch in Figur 6B dargestellt, indem die Fläche lediglich grau gezeigt ist. Dies kann sogar dazu führen, dass das erste Motiv 4 sich nur noch so schwach vom Hintergrund abhebt, dass es nicht mehr wahrnehmbar ist.

Mit der erfindungsgemäßen Ausbildung des optisch variablen Elementes 1 wird über den gesamten größeren Winkelbereich Δαₓ gemäß Figur 7C jeweils eines der in Figuren 5A-5F gezeigten Streifenmuster erzeugt, von denen eines zum Vergleich in Figur 6C nochmals dargestellt ist. Man sieht daran deutlich, dass durch die Konzentration auf die einzelnen reflektierenden Streifen diese eine deutlich höhere Lichtmenge aufweisen, so dass die beschriebene bessere Sichtbarkeit erreicht wird. In Figur 7C ist angedeutet, dass jede Substruktur 8 für einen Raumwinkel 20₁, 20₂, 20₃, 20₄ und 20₅ ausgelegt ist. Somit wird der gleiche Winkelbereich Δαₓ im Vergleich zu Fig. 7B abgedeckt, aber mit der beschriebenen besseren Sichtbarkeit für einen Betrachter.

Bei dem erfindungsgemäßen optisch variablen Element 1 ist die gesamte Fläche des ersten Motives 4 mit den Mikrospiegeln überdeckt. Das erste Motiv 4 reflektiert damit die maximal mögliche Lichtmenge in den gewünschten Bereich des ersten Betrachtungswinkels αₓ und nutzt somit die vorhandene Fläche zur bestmöglichen Helligkeit optimal aus.

Der Abstand der Mikrospiegel in der jeweiligen Substruktur 8 ist so gewählt, dass einerseits ein möglichst hohes Kontrastempfinden des menschlichen Auges vorliegt und dass andererseits die Auflösung des ersten Motives 4 nicht unnötig verschlechtert wird. Es haben sich etwa 1 bis 5 Linien pro Millimeter und insbesondere drei Linien pro Millimeter als besonders vorteilhaft herausgestellt.

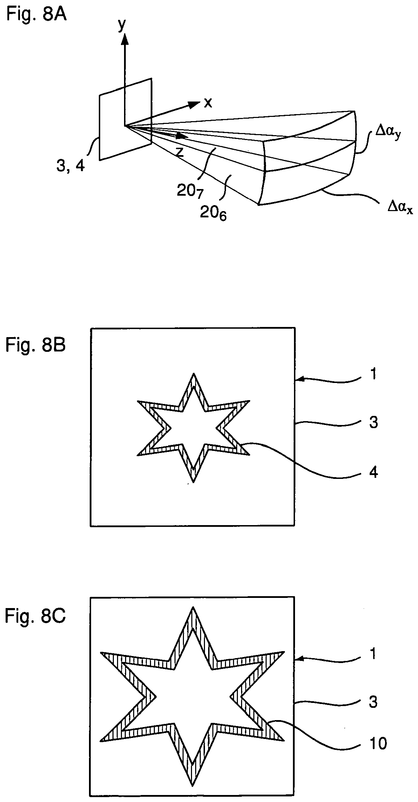

Die beschriebene Darstellung des ersten Motives 4 durch die Substrukturen 8 wird in der erfindungsgemäßen Ausführungsform so weitergebildet, dass das erste Motiv 4 bei einer Änderung der Betrachtungsrichtung (z. B. durch Ändern des zweiten Betrachtungswinkels α_{y}) nicht mehr sichtbar ist und stattdessen ein zweites Motiv für den Betrachter wahrnehmbar ist. Damit können z.B. kinematische Effekte realisiert werden. Es wird also der genutzte Raumwinkel durch Vergrößerung des Bereiches des zweiten Betrachtungswinkels α_{y} vergrößert, wie in Fig. 8A angedeutet ist, in der zwei Raumwinkel 20₆ und 20₇ eingezeichnet sind.

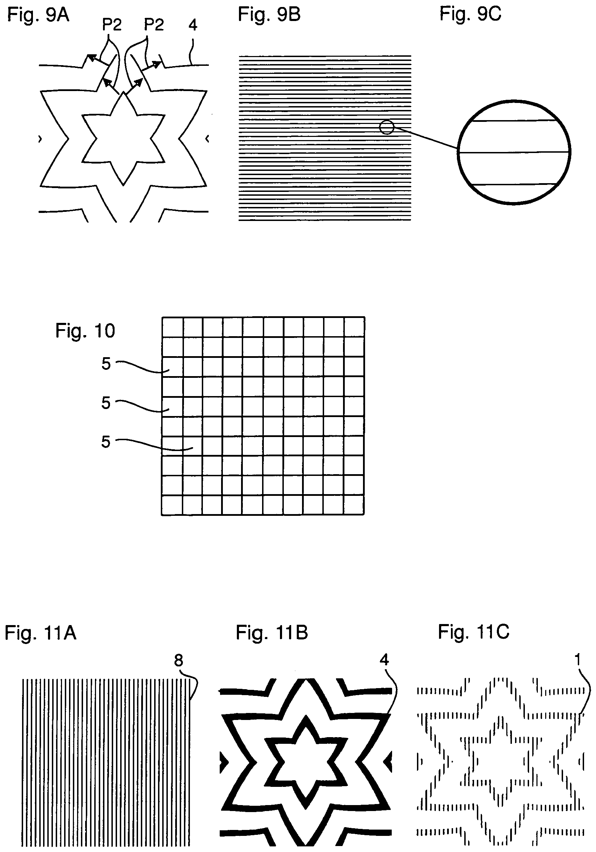

In Fig. 8B ist als erstes Motiv 4 ein Stern gezeigt. Als zweites Motiv 10 ist in Fig. 8C ein größerer Stern 10 gezeigt. Wenn man mehrere zweite Sterne 10 vorsieht, kann z.B. ein sogenannter "pumpender Stern" realisiert werden. Dieser pumpende Stern soll z. B. bei Drehung des optisch variablen Elementes 1 um die x- und die y-Achse jeweils im Bereich von -40° bis +40° sichtbar sein. Als erstes Motiv und als zweite Motive dienen somit konzentrisch angeordnete Sterne, wobei die Sterne bei Drehung des Motivbereiches 3 um die x-Achse (Änderung des zweiten Betrachtungswinkels α_{y} in der yz-Ebene) in Richtung der Pfeile P2 in Figur 9A größer werden.

Um dies realisieren zu können, sind die Mikrospiegel 5 nicht mehr streifenförmig ausgebildet, wie in Figur 2 angedeutet ist, sondern z.B. quadratisch, wie in der Draufsicht von Figur 10 schematisch dargestellt ist. Die Kantenlänge der einzelnen Mikrospiegel kann beispielsweise 20 µm aufweisen. Jeder der Mikrospiegel 5 ist als Planspiegel ausgebildet und gegenüber der xy-Ebene gekippt, wobei die Kippung jedes Mikrospiegels durch die beiden Kippwinkel β_{y} und βₓ eindeutig beschreibbar ist. Der Kippwinkel β_{y} ist der Winkel zwischen der Projektion der Flächennormalen des Mikrospiegels 5 in die xy-Ebene und der Richtung der x-Achse und der Kippwinkel βₓ ist der Winkel zwischen der Projektion der Flächennormalen des Kippspiegels in die yz-Ebene und der Richtung der z-Achse.

Der Kippwinkel βₓ ist bei allen Mikrospiegeln 5 so gewählt, dass der in Verbindung mit Figur 9A angedeutete Pumpeffekt realisiert wird.

In Figur 9B ist der Kippwinkel βₓ der Mikrospiegel 5 angedeutet, wobei der Kippwinkel βₓ von einer in Figur 9B bzw. Figur 9C gezeigten Linie bis zur nächsten Linie von -20° auf +20° ansteigt, um den gewünschten Winkelbereich Δα_{y} von -40° bis +40° für den zweiten Betrachtungswinkel α_{y} abzudecken. Dies kann z.B. in fünf bis zehn Schritten erfolgen, so dass zwischen zwei Linien immer fünf bis zehn verschiedene Kippwinkel βₓ der Mikrospiegel 5 vorgesehen sind.

Ein Beobachter sieht aus einer bestimmten Betrachtungsrichtung somit nur die Mikrospiegel 5 hell aufleuchten, die so gekippt sind, dass das Licht in den Raumwinkel reflektiert wird, in dem die Betrachtungsrichtung liegt. Die Darstellung in Figur 11A zeigt beispielhaft den durch die Mikrospiegel 5 abgedeckten Flächenbereich des Motivbereiches 3, in dem der Kippwinkel β_{y} zur Betrachtungsrichtung passt. Die Darstellung in Figur 11B zeigt beispielhaft den durch die Mikrospiegel 5 abgedeckten Flächenbereich des Motivbereiches 3, in dem der Kippwinkel βₓ zur Betrachtungsrichtung passt, so dass sich für einen Betrachter die in Figur 11C gezeigte Darstellung ergibt. Auch hier sind die dunklen Streifen stellvertretend für die hell aufleuchtenden Bereiche eingezeichnet.

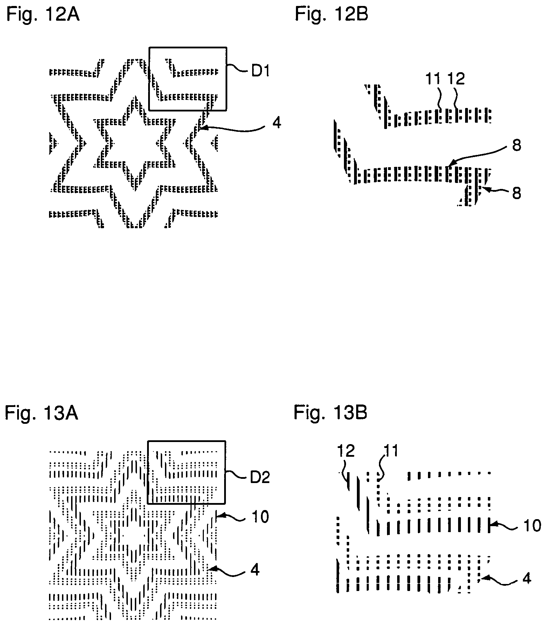

Veränderungen ergeben sich für den Betrachter nun z.B. beim Kippen des optisch variablen Elementes 1 um die y-Achse, wie z.B. in Figur 12A in Verbindung mit dem vergrößerten Detail D1 in Figur 12B dargestellt ist. Die gepunktet eingezeichneten Linien 11 zeigen als Referenz die Ausgangsstellung gemäß Figur 11C und die durchgezogenen Linien 12 zeigen die nun für den Betrachter wahrnehmbare Darstellung. Der Betrachter nimmt also das gleiche erste Motiv 4 wahr wie in Fig. 11C. Lediglich die Substruktur 8 ist eine andere. Die Substruktur 8 gemäß Fig. 12B ist etwas in x-Richtung verschoben zu der Substruktur 8 in Figur 11C.

Wenn der Betrachter das optisch variable Element 1 um die x-Achse kippt, ändert sich die für den Betrachter wahrnehmbare Darstellung von der von Figur 11C zu der gemäß Figuren 13A und 13B, wobei Figur 13B eine vergrößerte Darstellung des Details D2 von Figur 13A ist. Auch bei der Darstellung gemäß Figuren 13A und 13B zeigen die gepunkteten Linien 11 die Darstellung gemäß Figur 11C und die durchgezogenen Linien 12 die nun für den Betrachter wahrnehmbare Darstellung. Es ist der beschriebene Pumpeffekt deutlich sichtbar. Die dargestellten Sterne sind in Figur 13A und 13B kleiner als in Figur 11C, da der Betrachter nun ein zweites Motiv 10 (den kleineren Stern) wieder mit einer Fein- bzw. Substruktur 8 sieht.

Von besonderem Vorteil ist bei der hier beschriebenen Ausführungsform, dass der gesamte flächige Motivbereich 3 mit den Mikrospiegeln 5 überdeckt ist. Der flächige Motivbereich 3 reflektiert damit die maximal mögliche Lichtmenge in den gewünschten Raumwinkel und nützt somit die vorhandene Fläche zur bestmöglichen Helligkeit bei Darstellung der Motive optimal aus.

Ferner führen die gleich ausgerichteten Mikrospiegel 5 jeder Substruktur 8 dazu, dass der Betrachter sehr hell erscheinende Linien mit kleinen Abständen wahrnehmen kann. Dadurch erscheint einerseits das mittels der Substruktur 8 dargestellte Motiv 4, 10 sehr scharf und kontrastreich. Andererseits führt dies auch zu einem sehr charakteristischen Erscheinungsbild der Motive, das zu einem hohen Wiedererkennungswert beiträgt. Dies ist insbesondere bei der Verwendung des optisch variablen Elementes als Sicherheitselement von Vorteil.

Selbst mit nur schwach reflektierenden Spiegeln 5 wie sie beispielsweise durch mit einem hochbrechenden Dielektrikum beschichteten und beidseitig beispielsweise in Prägelack oder Schutzlack eingebetteten Spiegeln mit Reflexionsgrad deutlich unter 1 gegeben sein können, lassen sich so auch noch vor einem weißen Hintergrund gut erkennbare Motive erzeugen.

Weiterhin kann z. B. mit einer farbkippenden Beschichtung (z. B. eine Dünnfilmbedampfung mit Reflektor/Dielektrikum/Absorber) ein attraktives Sicherheitselement 1 mit Farbwechseleffekt beim Kippen erzeugt werden.

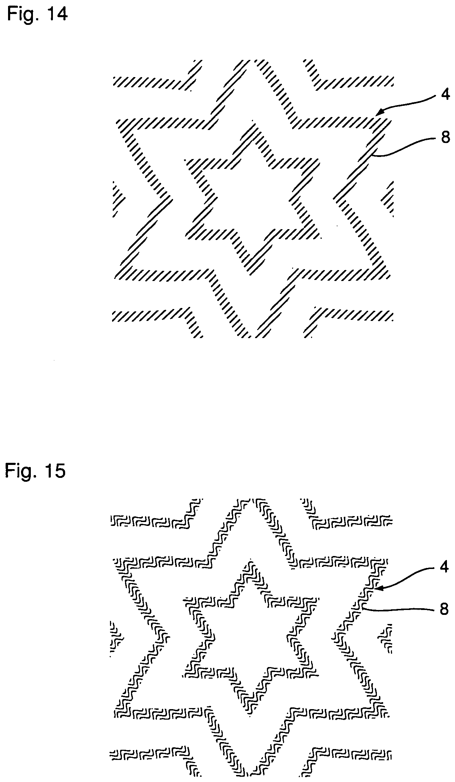

Bei den bisher beschriebenen Ausführungsformen war die Substruktur 8 jeweils ein Linienraster, bei dem sich die Linien in y-Richtung erstrecken und in x-Richtung voneinander beabstandet sind. Die Substrukturen 8 sind natürlich nicht darauf beschränkt. So können z.B. schräg verlaufende Linienmuster, wie in Figur 14 gezeigt ist, oder gewellte Linienmuster, wie in Figur 15 gezeigt ist, für die Substrukturen 8 verwendet werden.

Bei den bisher beschriebenen Ausführungsformen variiert vorzugsweise der Kippwinkel β_{y} der Mikrospiegel 5 in einer senkrecht auf den Linien der Substrukturen 8 liegenden Richtung.

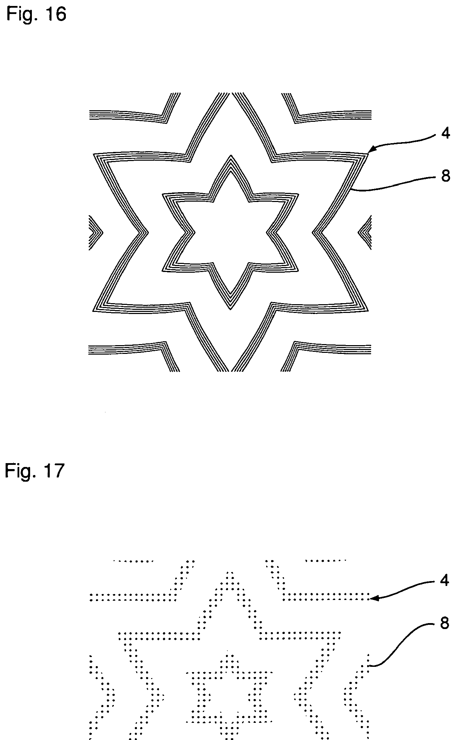

In Figur 16 ist eine Ausführungsform schematisch dargestellt, bei der die Substrukturen 8 durch Kurven realisiert sind, die den Konturen der Sterne 4, 10 folgen. Hier verläuft der kinematische Effekt der Substrukturen 8 in derselben Richtung wie der der Sterne 4, 10, die auch als Grobmotive bezeichnet werden können. Somit pumpen die Grobmotive 4, 10 auf großer Längenskala bei Kippen des Motivbereiches 3 um eine erste Achse, während beim Kippen des Motivbereiches 3 um eine zweite Achse die feinen Linien der Substrukturen 8 leicht größer bzw. kleiner werdende Sterne beschreiben.

Die Substrukturen müssen zudem nicht zwangsweise aus Linienstrukturen aufgebaut sein, sondern können z.B. auch punktartige Darstellungen zeigen, wie in Fig. 17 angedeutet ist.

Obwohl in den beschriebenen Ausführungsformen die Substrukturen bzw. - motive beim Kippen um die y-Achse und die Grobmotive 4, 10 beim Kippen um die x-Achse variieren, können die Effekte bei entsprechender Wahl der Neigung der Mikrospiegel 5 natürlich auch für ein Kippen um andere Drehachsen angepasst werden.

Natürlich kann auch jedes Grobmotiv 4 als weitgehend beliebiges Motiv ausgebildet sein und beispielsweise Umrisse von Buchstaben, Symbolen, Wertzahlen usw. darstellen. Der beschriebene kinematische Effekt der Grobmotive ist natürlich nicht auf den beschriebenen "Pumpeffekt" und das beschriebene Kippbild (Übergang einer ersten in eine zweite Darstellung) beschränkt. Mit den Grobmotiven können beispielsweise andere kinematische Effekte (z.B. eine Bewegung in eine bestimmte Richtung) dargestellt werden oder sie können auch eine stereographische Darstellung zeigen. Eine stereographische Darstellung könnte durch entsprechend dem Grobmotiv durchgeführte Variation des Kippwinkels βₓ der Mikrospiegel 5 und einer beispielsweise einem Feinmotiv mit horizontalen Linien entsprechenden Variation des Kippwinkels β_{y} der Mikrospiegel 5 realisiert werden.

Statt den genannten Mikrospiegeln 5 können auch diffraktive Gitterstrukturen, insbesondere asymmetrische Gitterstrukturen (die z. B. als Sägezahngitter ausgebildet sind) vorgesehen sein. Diese können von ihren Abmessungen so beschaffen sein, dass für die erfindungsgemäß gewünschte gerichtete Reflexion des einfallenden Lichtes diffraktive Effekte (Beugung bei kleinen Strukturgrößen von bis zu wenigen Mikrometern) oder strahlenoptische Effekte (bei Strukturgrößen von vielen Mikrometern) dominieren.

Mit dem erfindungsgemäßen reflektiven optisch variablen Element 1 kann weiterhin auch ein Volumenhologramm belichtet werden, wie dies grundsätzlich z.B. in der DE 10 2006 016 139 A1 beschrieben ist. Dazu kann beispielsweise ein auf Mikrospiegeln 5 oder Sägezahngittern basierter Master basierend auf dem erfindungsgemäßen optisch variablen Element benutzt werden. Ein so erhaltenes Volumenhologramm zeigt dann ebenfalls eine besonders kontrastreiche und in einem großen Raumwinkel sichtbare Darstellung.

Obwohl bei den bisher beschriebenen Ausführungsformen das optisch variable Element 1 stets als reflektives Element ausgebildet war, kann das optisch variable Element 1 auch transmissiv ausgebildet sein. In diesem Fall werden z.B. anstatt der Mikrospiegel 5 entsprechende transmissive Mikroelemente, wie z. B. Prismenelemente, angeordnet, die die gewünschte gerichtete Strahlablenkung bei Transmission bewirken.

Ferner ist es möglich, eine farbkippende Beschichtung auf den Mikroelementen vorzusehen. Dabei kann es sich beispielsweise um ein Dünnfilmsystem (mit z.B. Absorber, Dielektrikum und Reflektor) oder auch um Flüssigkristalle, insbesondere cholesterische Flüssigkristalle, handeln.

Die Mikroelemente, insbesondere die Mikrospiegel weisen bevorzugt Abmessungen zwischen 5µm und 50µm auf und können z.B. als im Wesentlichen strahlenoptisch wirkende Sägezahngitter (z.B. Gitterperiode größer als 5µm) ausgebildet sein.

Bei der Ausbildung mit diffraktiven Strukturen kann das Beugungsgitter insbesondere ein Sinusgitter oder ein asymmetrisches Gitter (beispielsweise ein Sägezahngitter) sein, wobei die Gitterperiode bis maximal 5µm und bevorzugt bis maximal 2µm beträgt.

Die verwendete transparente Beschichtung zur Ausbildung der Mikrospiegel 5 ist insbesondere ein hochbrechendes Dielektrikum (beispielsweise TiO₂), dessen Brechungsindex um mindestens 0,2 höher ist als der des beschichteten Materials (beispielsweise des Prägelacks). Zum Schutz insbesondere vor Abformungen ist die hochbrechende dielektrische Beschichtung bevorzugt zwischen einem transparenten Prägelack und einem ebenfalls transparenten Schutzlack eingebettet.

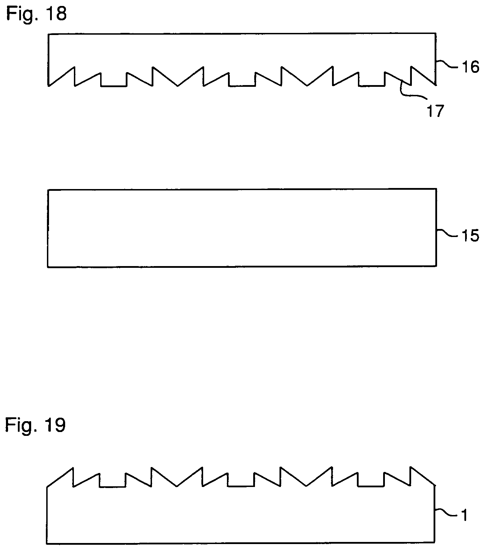

In Figuren 18 und 19 ist schematisch eine mögliche Herstellung des optisch variablen Elementes 1 gezeigt. Es wird ein Substrat 15 bereitgestellt, das z.B. ein herkömmlicher Prägelack sein kann, in den mittels einem Prägewerkzeug 16 die Struktur der Mikrospiegel 5 geprägt wird (Fig. 19). Dazu weist das Prägewerkzeug 16 eine Prägefläche 17 auf, in der die invertierte Form der zu prägenden Oberflächenstruktur ausgebildet ist (Fig. 18).

Das erfindungsgemäße optisch variable Element 1 kann mit Hologrammen sowie Mikrospiegeldarstellungen, insbesondere mit Wölbeffekt, Stereogrammen, etc. kombiniert werden. Diese können in einem Arbeitsgang in denselben Prägelack geprägt werden.

Darüber hinaus kann das optisch variable Element 1 auch mit anderen Sicherheitsmerkmalen kombiniert werden. Beispielsweise kann das optisch variable Element mit Cleartext (Aussparungen in Form einer Ziffern-, Buchstaben- und/ oder Zeichenfolge in einer opaken, insbesondere metallischen Beschichtung), Farbkippeffekten, Magnetausstattung, Flüssigkristallen und/oder Fluoreszenzmerkmalen ausgestattet werden.

Das optisch variable Element 1 kann als folienbasiertes Sicherungselement ausgebildet sein. So kann es beispielsweise als Transferstreifen, Laminatstreifen, Patch oder Fensterfaden 19 (Fig. 1) ausgebildet sein. Dazu kann es z.B. auf einer Trägerfolie ausgebildet werden, von der es in bekannter Weise auf das Wertdokument, wie z.B. die Banknote 2, übertragen werden kann. Es ist auch möglich, das Sicherheitselement 1 direkt auf dem Wertdokument auszubilden. So kann ein direkter Druck mit anschließender Prägung des Sicherheitselementes auf einem Polymersubstrat durchgeführt werden, um beispielsweise bei Kunststoffbanknoten ein erfindungsgemäßes Sicherheitselement auszubilden.

Das erfindungsgemäße Sicherheitselement 1 kann in verschiedensten Substraten ausgebildet werden. Insbesondere kann es in oder auf einem Papiersubstrat, einem Papier mit Synthesefasern, d.h. Papier mit einem Anteil x polymeren Materials im Bereich von 0 < x < 100 Gew.-%, einer Kunststofffolie, z.B. einer Folie aus Polyethylen (PE), Polyethylenterephthalat (PET), Polybutylenterephthalat (PBT), Polyethylennaphthalt (PN), Polypropylen (PP) oder Polyamid (PA), oder einem mehrschichtigen Verbund, insbesondere einem Verbund mehrerer unterschiedlicher Folien (Kompositverbund) oder einem Papier-Folien-Verbund (Folie/Papier/Folie oder Papier/Folie/Papier), wobei das Sicherheitselement in oder auf oder zwischen jeder der Schichten eines solchen mehrschichtigen Verbundes vorgesehen werden kann, ausgebildet werden.

Ferner kann zur Ausbildung der Mikrospiegel eine Metallschicht auf dem Substrat 15 ausgebildet sein. Als Material kann beispielsweise Aluminium, Silber, Kupfer, Chrom, Eisen und/oder ein sonstiges Metall oder Legierungen davon verwendet werden.

### Bezugszeichenliste

- 1: Sicherheitselement
- 2: Banknote
- 3: Flächiger Motivbereich
- 4: Erstes Motiv
- 5: Mikrospiegel
- 6: Linie
- 7: Umrandung
- 8: Submotiv
- 10: Zweites Motiv
- 11: Gepunktete Linie
- 12: Durchgezogene Linie
- 15: Substrat
- 16: Prägewerkzeug
- 17: Prägefläche
- 19: Fensterfaden
- 20: Raumwinkel
- 21: Betrachtungsrichtung
- P1: Beleuchtungsrichtung/Lichteinfall
- P2: Richtung des Pumpeffektes
- αₓ: Erster Betrachtungswinkel
- α_{y}: Zweiter Betrachtungswinkel
- βₓ, β_{y}: Kippwinkel der Mikrospiegel

## Patentansprüche

1. Optisch variables Element mit
einem flächigen Motivbereich (3) mit einem ersten Motiv (4), das mehrere sich über das gesamte erste Motiv (4) erstreckende Substrukturen (8) enthält, die jeweils abwechselnd angeordnete helle und dunkle Teilbereiche aufweisen,
wobei jede Substruktur (8) bei Variation eines in einer ersten Ebene liegenden ersten Betrachtungswinkels (αₓ) relativ zu einer vorgegebenen Beleuchtungsrichtung (P1) nur unter genau einem der ersten Betrachtungswinkel (αₓ) sichtbar ist und alle ersten Betrachtungswinkel (αₓ) verschieden sind, so dass in Abhängigkeit des ersten Betrachtungswinkels (αₓ) das erste Motiv (4) mit nur der entsprechenden Substruktur (8) wahrnehmbar ist, wobei die hellen Teilbereiche mit einer Raumfrequenz zwischen 0,5/mm und 5/mm angeordnet sind,
wobei der flächige Motivbereich (3) gerichtet reflektierende Elemente (5) aufweist, wobei die gerichtet reflektierenden Elemente einfallendes Licht in einen dem ersten Betrachtungswinkel (αₓ) entsprechenden Raumwinkel reflektieren, wobei die hellen Teilbereiche jeder Substruktur durch gerichtete Reflexion der entsprechenden gerichtet reflektierenden Elemente wahrnehmbar sind,
wobei der flächige Motivbereich (3) zumindest ein zweites Motiv (10) aufweist, das mehrere sich über das gesamte zweite Motiv (10) erstreckende Substrukturen (8) enthält, die jeweils abwechselnd angeordnete helle und dunkle Teilbereiche aufweisen,
wobei jede Substruktur (8) des zumindest einen zweiten Motivs (10) bei Variation des ersten Betrachtungswinkels (αₓ) nur unter genau einem der ersten Betrachtungswinkel (αₓ) sichtbar ist und alle ersten Betrachtungswinkel (αₓ) der Substrukturen (8) des zumindest einen zweiten Motivs (10) verschieden sind,
wobei jedes Motiv bei Variation eines in einer zweiten Ebene liegenden zweiten Betrachtungswinkels (α_{y}) relativ zur Beleuchtungsrichtung (P1) nur unter genau einem der zweiten Betrachtungswinkel (α_{y}) sichtbar ist und alle zweiten Betrachtungswinkel (α_{y}) verschieden sind,
so dass in Abhängigkeit des ersten und zweiten Betrachtungswinkels (α_{y}, α_{y}) das entsprechende Motiv (4) mit nur der entsprechenden Substruktur (8) wahrnehmbar ist,
und wobei das erste und das zumindest eine zweite Motiv (4, 10) bei Änderung des zweiten Betrachtungswinkels (α_{y}) einen kinematischen Effekt darbieten.

2. Optisch variables Element nach Anspruch 1, bei dem bei Änderung des ersten Betrachtungswinkels (αₓ) die verschiedenen Substrukturen (8) vorzugsweise einen kinematischen Effekt auf kleinerer Längenskala darbieten im Vergleich zum kinematischen Effekt der Motive (4, 10).

3. Optisch variables Element nach einem der obigen Ansprüche, wobei das optisch variable Element (1) als reflektives Element ausgebildet ist.

4. Optisch variables Element nach einem der obigen Ansprüche, bei dem zumindest bei einer der Substrukturen (8) die abwechselnd angeordneten hellen und dunklen Teilbereiche sich zumindest lokal periodisch wiederholen.

5. Optisch variables Element nach einem der obigen Ansprüche, bei dem zumindest bei einer der Substrukturen (8) die hellen Teilbereiche durch ein Linienmuster mit zumindest lokal parallelen Linien gebildet ist.

6. Optisch variables Element nach einem der obigen Ansprüche 4 oder 5, bei dem die hellen Teilbereiche mit einer Raumfrequenz von 1/mm bis 5/mm angeordnet sind.

7. Optisch variables Element nach einem der obigen Ansprüche, bei dem der Abstand der hellen Teilbereiche bei zumindest einer der Substrukturen (8) um mindestens einen Faktor 5, bevorzugt mindestens einen Faktor 10 kleiner ist als die Ausdehnung des ersten Motivs (4) in Richtung des Abstandes der hellen Teilbereiche.

8. Optisch variables Element nach einem der obigen Ansprüche, bei dem die erste und zweite Ebene aufeinander senkrecht stehen.

9. Optisch variables Element nach einem der obigen Ansprüche, bei dem der flächige Motivbereich (3) gerichtet reflektierende Elemente (5), insbesondere reflektierende Facetten, aufweist, deren Abmessungen innerhalb des flächigen Motivbereiches (3) mindestens 3µm, bevorzugt mindestens 5µm und besonders bevorzugt mindestens 10µm betragen.

10. Optisch variables Element nach einem der obigen Ansprüche, bei dem der flächige Motivbereich (3) gerichtet reflektierende Elemente aufweist, bei denen die reflektive Wirkung mittels diffraktiver Strukturen erzeugt wird, wobei die diffraktiven Strukturen als asymmetrische Gitterstrukturen mit einer Periode von maximal 5µm, bevorzugt maximal 3µm und besonders bevorzugt maximal 2µm ausgebildet sind.

11. Optisch variables Element nach einem der Ansprüche 1 bis 9, bei dem der flächige Motivbereich gerichtet reflektierende Elemente aufweist, die durch im Wesentlichen strahlenoptisch reflektierende Gitter mit Perioden von mehr als 5µm und bevorzugt mehr als 10µm ausgebildet sind.

12. Optisch variables Element nach einem der obigen Ansprüche, wobei das optisch variable Element zumindest teilweise transparent ist.

13. Optisch variables Element nach einem der obigen Ansprüche, wobei der flächige Motivbereich (3) als Prägestruktur mit einer reflexionserhöhenden Beschichtung ausgebildet ist, und/oder bei dem der flächige Motivbereich eine farbkippende Beschichtung aufweist.

14. Optisch variables Element nach einem der obigen Ansprüche, bei dem mehrere zweite Motive für unterschiedliche zweite Betrachtungswinkel und jeweils mit entsprechenden Substrukturen vorgesehen sind.

15. Optisch variables Element nach einem der obigen Ansprüche, bei dem sich die Substrukturen über den gesamten flächigen Motivbereich erstrecken.

16. Optisch variables Element nach einem der obigen Ansprüche, bei dem die Substrukturen als solche wahrnehmbar sind.

17. Wertdokument mit einem optisch variablen Element nach einem der obigen Ansprüche.

## Claims

1. An optically variable element having
an areal motif region (3) having a first motif (4) that includes multiple substructures (8) that extend across the entire first motif (4) and that each comprise alternatingly arranged light and dark sub-regions,
each substructure (8) being visible, when a first viewing angle (αₓ) lying in a first plane is varied relative to a specified illumination direction (P1), only at exactly one of the first viewing angles (αₓ), and all first viewing angles (αₓ) being different,
such that, depending on the first viewing angle (αₓ), the first motif (4) is perceptible with only the corresponding substructure (8), the light sub-regions being arranged with a spatial frequency between 0.5/mm and 5/mm,
the areal motif region (3) comprising directionally reflective elements (5), the directionally reflective elements reflecting incident light in a solid angle corresponding to the first viewing angle (αₓ), the light sub-regions of each substructure being perceptible due to directional reflection of the corresponding directionally reflective elements,
the areal motif region (3) comprising at least one second motif (10) that includes multiple substructures (8) that extend across the entire second motif (10) and that each comprise alternatingly arranged light and dark sub-regions,
each substructure (8) of the at least one second motif (10) being visible, when the first viewing angle (αₓ) is varied, only at exactly one of the first viewing angles (αₓ) and all first viewing angles (αₓ) of the substructures (8) of the at least one second motif (10) being different,
each motif being visible, when a second viewing angle (α_{y}) lying in a second plane is varied relative to the illumination direction (P1), only at exactly one of the second viewing angles (α_{y}), and all second viewing angles (α_{y}) being different,
such that, depending on the first and second viewing angle (αₓ, α_{y}), the corresponding motif (4) is perceptible with only the corresponding substructure (8),
and the first and the at least one second motif (4, 10) presenting, when the second viewing angle (α_{y}) is changed, a cinematic effect.

2. The optically variable element according to claim 1, in which, when the first viewing angle (αₓ) is changed, the different substructures (8) preferably present a cinematic effect on a smaller length scale compared with the cinematic effect of the motifs (4, 10).

3. The optically variable element according to one of the preceding claims, the optically variable element (1) being formed as a reflective element.

4. The optically variable element according to one of the preceding claims, in which, at least in one of the substructures (8), the alternatingly arranged light and dark sub-regions repeat at least locally periodically.

5. The optically variable element according to one of the preceding claims, in which, at least in one of the substructures (8), the light sub-regions are formed by a line pattern having at least locally parallel lines.

6. The optically variable element according to one of the preceding claims 4 or 5, in which the light sub-regions are arranged with a spatial frequency of 1/mm to 5/mm.

7. The optically variable element according to one of the preceding claims, in which, in at least one of the substructures (8), the separation of the light sub-regions is smaller than the dimension of the first motif (4) in the direction of the separation of the light sub-regions by at least a factor of 5, preferably at least a factor of 10.

8. The optically variable element according to one of the preceding claims, in which the first and second plane are perpendicular to one another.

9. The optically variable element according to one of the preceding claims, in which the areal motif region (3) comprises directionally reflective elements (5), especially reflective facets, whose dimensions within the areal motif region (3) are at least 3 µm, preferably at least 5 µm and particularly preferably at least 10 µm.

10. The optically variable element according to one of the preceding claims, in which the areal motif region (3) comprises directionally reflective elements in which the reflective effect is produced by means of diffractive structures, the diffractive structures being formed as asymmetric grating structures having a period of a maximum of 5 µm, preferably a maximum of 3 µm and particularly preferably a maximum of 2 µm.

11. The optically variable element according to one of claims 1 to 9, in which the areal motif region comprises directionally reflective elements that are formed by substantially geometrically-optically reflective gratings having periods of more than 5 µm and preferably more than 10 µm.

12. The optically variable element according to one of the preceding claims, the optically variable element being at least partially transparent.

13. The optically variable element according to one of the preceding claims, the areal motif region (3) being formed as an embossing structure having a reflection-increasing coating, and/or in which the areal motif region comprises a color-shifting coating.

14. The optically variable element according to one of the preceding claims, in which are provided multiple second motifs for different second viewing angles and each having corresponding substructures.

15. The optically variable element according to one of the preceding claims, in which the substructures extend across the entire areal motif region.

16. The optically variable element according to one of the preceding claims, in which the substructures are perceptible as such.

17. A value document having an optically variable element according to one of the preceding claims.

## Revendications

1. Élément optiquement variable, pourvu
d'une zone à motifs (3) plane, dotée d'un premier motif (4), qui contient plusieurs substructures (8) s'étendant sur l'ensemble du premier motif (4), qui comportent chacune des zones partielles claires et foncées, placées de manière alternée,
lors d'une variation d'un premier angle d'observation (αₓ) situé dans un premier plan par rapport à une direction d'éclairage (P1) prédéfinie, chaque substructure (8) n'étant visible que sous précisément l'un des premiers angles d'observation (αₓ) et tous les premiers angles d'observation (αₓ) étant différents,
de telle sorte, qu'en fonction du premier angle d'observation (αₓ), le premier motif (4) ne soit perceptible qu'avec la substructure (8) correspondante, les zones partielles claires étant placées avec une fréquence spatiale comprise entre 0,5/mm et 5/mm,
la zone à motifs (3) plane comportant des éléments (5) à réflexion dirigée, les éléments à réflexion dirigée réfléchissant la lumière incidente sous un angle spatial correspondant au premier angle d'observation (αₓ), les zones partielles claires de chaque substructure étant perceptibles par une réflexion dirigée des éléments à réflexion dirigée correspondants,
la zone à motifs (3) plane comportant au moins un deuxième motif (10), qui contient plusieurs substructures (8) s'étendant sur l'ensemble du deuxième motif (10), qui comportent chacune des zones partielles claires et foncées, placées de manière alternée,
lors d'une variation du premier angle d'observation (αₓ), chaque substructure (8) de l'au moins un deuxième motif (10) n'étant visible que sous précisément l'un des premiers angles d'observation (αₓ) et tous les premiers angles d'observation (αₓ) des substructures (8) de l'au moins un deuxième motif (10) étant différents,
lors d'une variation d'un deuxième angle d'observation (α_{y}) situé dans un deuxième plan, par rapport à la direction d'éclairage (P1), chaque motif n'étant visible que sous précisément l'un des deuxièmes angles d'observation (α_{y}) et tous les deuxièmes angles d'observation (α_{y}) étant différents,
de telle sorte qu'en fonction du premier et du deuxième angle d'observation (αₓ, α_{y}), le motif (4) correspondant ne soit perceptible qu'avec la substructure (8) correspondante,
et lors d'un changement du deuxième angle d'observation (α_{y}), le premier et l'au moins un deuxième motif (4, 10) offrant un effet cinématique.

2. Élément optiquement variable selon la revendication 1, sur lequel lors d'un changement du premier angle d'observation (αₓ), les différentes substructures (8) offrent de préférence un effet cinématique sur une échelle de longueur plus petite, en comparaison de l'effet cinématique des motifs (4, 10).

3. Élément optiquement variable selon l'une quelconque des revendications précédentes, l'élément (1) optiquement variable étant conçu sous la forme d'un élément réfléchissant.

4. Élément optiquement variable selon l'une quelconque des revendications précédentes, sur lequel sur au moins l'une des substructures (8), les zones partielles claires et foncées placées de manière alternée se répètent périodiquement au moins de manière locale.

5. Élément optiquement variable selon l'une quelconque des revendications précédentes, sur lequel sur au moins l'une des substructures (8), les zones partielles claires sont constituées d'une configuration de lignes, avec au moins des lignes localement parallèles.

6. Élément optiquement variable selon l'une quelconque des revendications précédentes 4 ou 5, sur lequel les zones partielles claires sont placées avec une fréquence spatiale de 1/mm à 5/mm.

7. Élément optiquement variable selon l'une quelconque des revendications précédentes, sur lequel, sur au moins l'une des substructures (8), l'écart des zones partielles claires est inférieur d'au moins un coefficient de 5, de préférence d'au moins un coefficient de 10 à l'extension du premier motif (4), en direction de l'écart des zones partielles claires.

8. Élément optiquement variable selon l'une quelconque des revendications précédentes, sur lequel le premier et le deuxième plan sont debout à la perpendiculaire l'un sur l'autre.

9. Élément optiquement variable selon l'une quelconque des revendications précédentes, sur lequel la zone à motifs (3) plane comporte des éléments (5) à réflexion dirigée, notamment des facettes réfléchissantes, dont les dimensions à l'intérieur de la zone à motifs (3) plane s'élèvent à au moins 3 µm, de préférence à au moins 5 µm et de manière particulièrement préférentielle à au moins 10 µm.

10. Élément optiquement variable selon l'une quelconque des revendications précédentes, sur lequel la zone à motifs (3) plane comporte des éléments à réflexion dirigée, sur lesquels l'effet réfléchissant est créé au moyen de structures diffractives, les structures diffractives étant conçues sous la forme de structures réticulaires asymétriques, avec une période d'un maximum de 5 µm, de préférence d'un maximum de 3 µm et de manière particulièrement préférentielle, d'un maximum de 2 µm.

11. Élément optiquement variable selon l'une quelconque des revendications 1 à 9, sur lequel la zone à motifs plane comporte des éléments à réflexion dirigée, qui sont conçus par des treillis réfléchissant sensiblement par faisceau optique, avec des périodes supérieures à 5 µm et de préférence supérieures à 10 µm.

12. Élément optiquement variable selon l'une quelconque des revendications précédentes, l'élément optiquement variable étant au moins partiellement transparent.

13. Élément optiquement variable selon l'une quelconque des revendications précédentes, la zone à motifs (3) plane étant conçue sous la forme d'une structure gaufrée, munie d'un revêtement augmentant la réflexion et / ou sur lequel la zone à motifs plane comporte une structure à couleurs chatoyantes.

14. Élément optiquement variable selon l'une quelconque des revendications précédentes, sur lequel plusieurs deuxièmes motifs sont prévus pour différents deuxièmes angles d'observation et avec respectivement des substructures correspondantes.

15. Élément optiquement variable selon l'une quelconque des revendications précédentes, sur lequel les substructures s'étendant sur l'ensemble de la zone à motifs plane.

16. Élément optiquement variable selon l'une quelconque des revendications précédentes, sur lequel les substructures sont perceptibles en tant que telles.

17. Document de valeur, pourvu d'un élément optiquement variable selon l'une quelconque des revendications précédentes.
